# EUROPEAN PATENT SPECIFICATION

(11) **EP 3 761 014 B1**
(45) Date of publication and mention of the grant of the patent: **07.12.2022**
(21) Application number: 19290048.8
(22) Date of filing: 02.07.2019
(51) Int. Cl.: G01N 23/04

(54) **RADIOGRAPHIC INSPECTION ASSEMBLY AND METHOD**
ANORDNUNG UND VERFAHREN ZUR DURCHSTRAHLUNGSPRÜFUNG
ENSEMBLE ET PROCÉDÉ D'INSPECTION RADIOGRAPHIQUE

(43) Date of publication of application: 06.01.2021
(73) Proprietor: Framatome, 92400 Courbevoie (FR)
(72) Inventor: Peterzol-Parmentier, Angela, 71000 Macon (FR)
(74) Representative: Lavoix

(56) References cited:
- US-A1- 2011 075 800
- US-A1- 2012 201 348
- US-A1- 2017 123 077
- US-A1- 2018 284 035
- Anonymous: "Complied Report on Polaris-H Measurements at Nuclear Power Plants", , 30 October 2014 (2014-10-30), pages 1-45, XP055687044, Retrieved from the Internet: URL:https://www.gammadata.se/assets/Upload s/PublicReleaseReport-v2.pdf [retrieved on 2020-04-17]

## Description

The present invention concerns the radiographic inspection of thick parts, particularly parts of a nuclear reactor.

Parts of a nuclear power plant such as the primary cooling loops are periodically submitted to radiographic inspections. The aim of such inspections is detecting flaws, for example in the welds connecting pipes to one another.

Such radiographic inspections are typically carried out using a source generating ionizing radiation and a radiographic film.

Document US2017/123077 discloses a radiographic inspection system including a digital detector array comprising a plurality of photon counting detectors and using an energy threshold of 1 MeV in order to remove the contribution from background noise such as scattered radiation.

Said method has numerous drawbacks.

The exposure time required for the radiographic film is very long.

The quality of the image is affected by the scattered radiation and by the hot spots located around the part to be inspected. A hot spot is a spot emitting a high level of ionizing radiation, due to a deposit of contamination or due to the activation of a part of an equipment. In a nuclear power plant, hot spots due to Co60 are the most frequent.

The operators handling the equipment used for the radiographic inspection can receive significant dose of radiation.

It is not possible to check if the source and the radiographic film are correctly positioned before the exposure is completed.

In this context, the aim of the invention is proposing a radiographic inspection assembly and method that do not have the drawbacks above.

According to a first aspect, the invention is directed to a radiographic inspection assembly, comprising:
- a source generating ionizing radiation;
- a digital detector array comprising a plurality of photon counting detectors each photon counting detector being arranged for detecting single photons, assessing an energy of the photon detected, comparing said energy with at least a first energy threshold, and incrementing a first photon counter when the energy assessed is higher than the first energy threshold, the photon counting detector being able to detect photons of any energy in a range [1 keV; 20000 keV];
- a control, arranged for selecting the first energy threshold at any level in the range [100 keV; 1200 keV];
- a calculation device, arranged for constituting a first image using the values of the first photon counters and storing the first image.

Due to the use of a digital detector array (DDA) comprising a plurality of photon counting detectors, the exposure time is very fast. It is divided by a factor higher than 10 with respect to a radiographic film. The total exposure time, necessary for example to inspect a whole weld, may be divided by more than 2, depending on the number of DDA used.

The dose of radiation received by the operators handling the radiographic assembly is significantly reduced as a consequence.

The first energy threshold can be used to eliminate the scattered radiation from the first image. The contrast is drastically improved.

It is not necessary anymore to develop the radiographic film.

The first image can be displayed in real time, so that the operators can judge if the source and/or the DDA are properly positioned.

The first image can be shared easily with operators/analysts which are not located in the facility where the inspection operation is implemented.

It is easier to store numerical images than radiographic films.

According to the present invention, the radiographic inspection assembly is further characterized in that:
- each photon counting detector is arranged for comparing the energy of the photon detected with a second energy threshold, and incrementing a second photon counter when the energy assessed is higher than the second energy threshold, wherein the control is arranged for selecting the second energy threshold at any level in the range [100 keV; 1300 keV] and higher than the first energy threshold, and wherein the calculation device is arranged for constituting a second image using the values of the second photon counters and storing the second image; and wherein the calculation device is arranged for calculating a third image by subtracting the second image from the first image.

In preferred embodiments of the invention, the radiographic inspection assembly can present the following features:
- the source generating ionizing radiation generates photons having an energy higher than 130 keV;
- the assembly comprises a holding and moving device, arranged for holding the digital detector array and for moving the digital detector array between several inspection positions with respect to a part to be inspected.

According to a second aspect, the invention is directed to a radiographic inspection method of a part, comprising the following steps:
- generating ionizing radiation on a first side of the part;
- selecting a first energy threshold at any level in the range [100 keV; 1200 keV];
- counting photons using a digital detector array arranged on a second side of the part opposite the first side, the digital detector array comprising a plurality of photon counting detectors each photon counting detector detecting single photons, assessing an energy of each photon detected, comparing said energy with at least the first energy threshold and incrementing a first photon counter when the energy assessed is higher than the first energy threshold the photon counting detector being able to detect photons of any energy in a range [1 keV; 20000 keV] ;
- constituting a first image using the values of the first photon counters and storing the first image.

According to the present invention, the method further comprises:
- a step of selecting a second energy threshold at any level in the range [100 keV; 1300 keV], the second energy threshold being chosen higher than the first energy threshold wherein each photon counting detector compares the energy of the photon detected with said second energy threshold and increments a second photon counter when the energy assessed is higher than the second energy threshold and wherein the method comprises a step of constituting a second image using the values of the second photon counters and storing the second image; and
- a step of calculating a third image by subtracting the second image from the first image;

In preferred embodiments of the invention, the radiographic inspection method can present the following features:
- the second energy threshold is comprised between 620 keV and 1 MeV, in order to remove in part from the third image at least the photons emitted by Co60;
- the method comprises a step of identifying flaws in the part using the third image;
- the ionizing radiation generated are photons having an energy higher than 130 keV.

Other features and advantages of the invention will become apparent when reading the detailed description given below, purely by way of example and in a non-limitative manner, referring to the following figures:
- The figure 1 is a sketch of the radiographic inspection assembly of the invention, used for inspecting a pipe weld;
- The figure 2 is a sketch showing the respective positions of the source generating ionizing radiation and of the DDA;
- The figure 3 is a sketch explaining the principle of direct conversion, on which the DDA is based;
- The figure 4 is a diagram showing the numbers of transmitted photons and of scattered photons detected by a PCD of the DDA in the situation of the figure 2, simulated by calculation; and
- The figure 5 is a diagram showing a profile extracted from the image produced by the DDA in the situation of the figure 2, in case the first energy threshold E1 is set to 0 keV (curve 1), 310 keV (curve 2), and 460 keV (curve 3), the abscissa being the reference of the pixels along the profile, and the ordinate being the count of the PCD corresponding to said pixel.

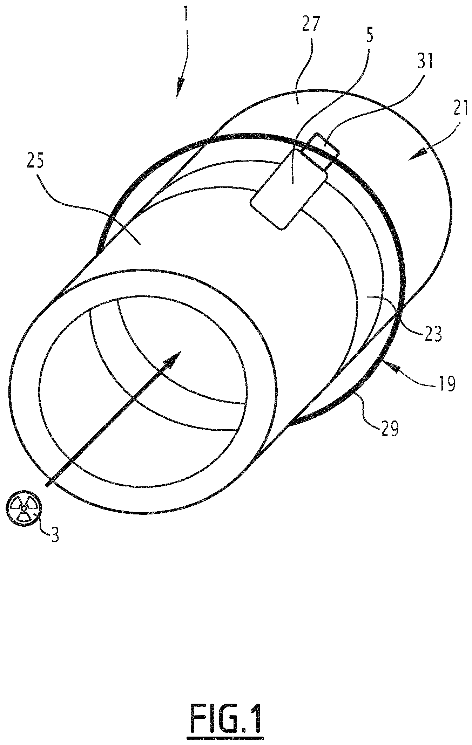

The radiographic inspection assembly 1 depicted on the figure 1 is an imaging system intended for inspecting various parts, having a thickness greater than 40 mm, of a nuclear power plant. It is particularly adapted for inspecting the welds of the primary coolant loops, homogeneous welds of the reactor pressure vessel, all sort of welds having a thickness greater than 40 mm, or the so-called bi-material welds securing two parts made of different materials (ferritic steel/austenitic steel).

It can be implemented as well for inspecting parts having a thickness comprised between 40 and 400 mm, preferably between 60 and 250 mm, and belonging to industrial facilities which are not nuclear power plants, especially the thick welds of said parts.

The purpose of the inspection is detecting flaws in the part. Said flaws are for example cracks, crevices, lacks of fusion, lacks of penetration, air bowls, inclusions, areas with a reduced thickness of material, etc.

The radiographic inspection assembly 1 comprises:
- a source 3 generating ionizing radiation;
- a digital detector array 5 (DDA) comprising a plurality of photon counting detectors 7 (PCD).

The source 3 typically emits photons having an energy higher than 130 keV.

The source 3 typically is a source of γ rays.

For example, the source 3 is a source of Selenium 75, Iridium 192, Cobalt 60, or a pulsed source such as a linear accelerator or a betatron.

As indicated by the ASTM E2736, a digital detector array (DDA) is an electronic device that converts ionizing or penetrating radiation into a discrete array of analog signals which are subsequently digitized and transferred to a computer for display as a digital image corresponding to the radiation energy pattern imparted upon the input region of the device.

The DDA 5 is a one-dimension or a two-dimensions array. In other words, it includes a single line or several parallel lines of PCD 7.

The number of lines is typically comprised between 256 to 2048.

The number of PCD 7 by line is typically comprised between 256 to 2048.

The DDA 5 produces images of the part to be inspected, each PCD 7 defining a pixel of the image.

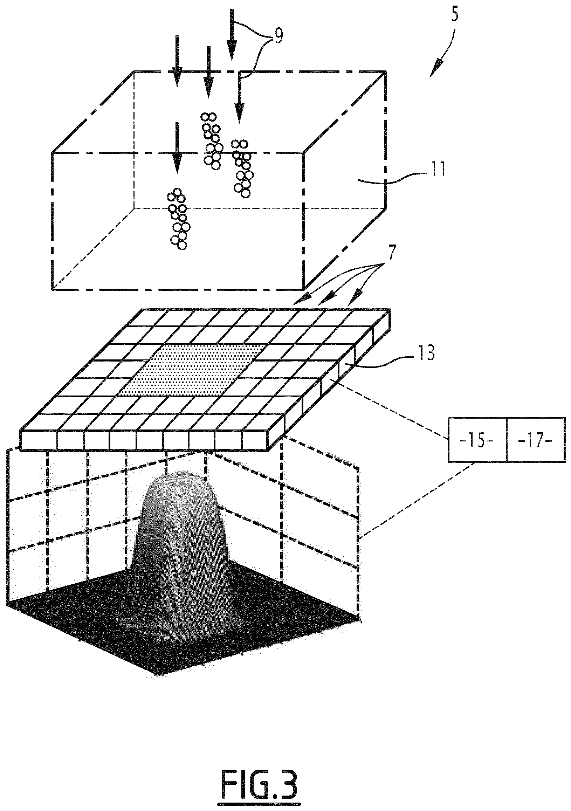

The DDA 5 is a direct detecting detector. The working principle of such detector is illustrated on the figure 3.

Direct detecting detectors comprise a semiconductor mono-crystallites layer 11. The layer 11 converts incident photons 9 into electron-hole pairs, which can be directly detected in a strong electrical field read-out circuit 13.

As there is no considerable scattering of light or electrons in the detection process itself, the thickness of the monocrystals, and therefore the detective quantum efficiency, can be improved without loss in image sharpness.

The semiconductor mono-crystallites layer 11 is for example a CdTe layer.

The read-out circuit 13 is for example a CMOS circuit.

Common thicknesses of CdTe based photon counting detectors vary between 1 mm and 5 mm.

Fast read-out circuits such as the CMOS circuit have a dead time of about 50 - 100 ns. It allows single photons counting at typical exposure conditions. Each photon deposits a certain charge proportional to its energy inside of the semiconductor mono-crystallites layer 11. That means that, beside the detection of the incident photons, additional information about its energy is generated. Hence, each physical pixel of the CMOS circuit can act as a PCD 7 and handle information on photon energy..

Therefore, each photon counting detector 7 is arranged for:
- detecting single photons,
- assessing an energy of the photon detected,
- comparing said energy with at least a first energy threshold E1, and
- incrementing a first photon counter when the energy assessed is higher than the first energy threshold E1.

Said operations are carried out by the read-out circuit 13.

The photon counting detector 7 is able to detect photons of any energy in a range [1 keV; 20000 keV].

The radiographic inspection assembly 1 comprises a control 15, arranged for selecting the first energy threshold E1 at any level in the range [100 keV; 1200 keV].

The control 15 is for example a computer, controlling the read-out circuit 13.

The radiographic inspection assembly 1 further comprises a calculation device 17, arranged for constituting a first image using the values of the first photon counters and storing the first image.

The calculation device 17 is for example a computer, typically the computer 15 controlling the read-out circuit 13.

This first image typically has the same size as the DDA 5. In other words, the first image has a number of pixel equal to the number of PCD 7 in the DDA 5. It has the same number of lines as the DDA. In each line, the number of pixel is equal to the number of PCD 7 in a line of the DDA.

Each PCD 7 corresponds to a pixel of the first image. To constitute the first image, the calculation device 17 reads the value of the first photon counter associated to each PCD 7. It defines the colour of the pixel corresponding to the PCD as a function of said value.

In a first embodiment, the first image is black and white. The calculation device 17 associates an intensity of white to the value of the first photon counter. If the value is 0, the colour is black. If the value is not 0, the colour is white, with a brightness proportional to said value.

In a second embodiment, the first image is coloured. The calculation device 17 associate a colour to the value of the first photon counter. For example, it defines coordinates in a RGB (Red, Green, Blue) coordinate system as a function of said value. The coordinates are calculated, using predefined tables or equations.

The calculation device 17 if necessary proceeds with adjustments of the first image, to increase contrast, brightness, etc

According to the present invention, each photon counting detector 7 is arranged for comparing the energy of the photon detected with a second energy threshold E2, and incrementing a second photon counter when the energy assessed is higher than the second energy threshold E2.

Said operations are carried out by the read-out circuit 13.

The control 15 is arranged for selecting the second energy threshold E2 at any level in the range [100 keV; 1300 keV].

The second energy threshold E2 is chosen higher than the first energy threshold (E1). For example, the second energy threshold E2 is at least 5 keV higher than the first energy threshold (E1).

The calculation device 17 is arranged for constituting a second image using the values of the second photon counters and storing the second image.

The second image is constituted as the first image.

According to the present invention, two levels of energy discrimination are used. Two counters are associated to each PCD 7.

The radiographic inspection assembly 1 comprises a holding and moving device 19, arranged for holding the digital detector array 7 and for moving the digital detector array 7 between several inspection positions with respect to a part 21 to be inspected.

An inspection is carried out at each inspection position.

In the example depicted on the figure 1, the part 21 is a pipe, with a weld 23 connecting two pipe segments 25, 27 to one another. The pipe segment 25 is made of stainless steel, and the pipe segment 27 is made of ferritic steel.

The holding and moving device 19 comprises a rail 29 arranged around the weld 23, and a slider 31 arranged for sliding along the rail 29. The DDA 5 is fixed to the slider 31.

The DDA 7 can therefore be moved successively to several inspection positions along the weld 23. The inspection positions are spaced from one another. They are chosen such that the images generated at the inspection positions, together, entirely cover the weld 23.

The calculation device 17 is such that the first and/or second images can be displayed on a display. Furthermore, the calculation device 17 is such that the first and/or second images can be processed to generate other images, which can be displayed on the display.

According to the present invention, a third image is calculated by subtracting the second image from the first image, as described below.

The first image, and/or the second image, and/or the third image are adapted for detecting flaws in the part. The flaws appear typically as areas of the images with a different shape and/or colour, that can be visually detected by an operator when the images are displayed on the display.

The invention is also directed to a radiographic inspection method of a part, which will be described below.

The method is particularly adapted to be implemented using the radiographic inspection assembly described above. Conversely, the radiographic inspection assembly described above is particularly adapted for implementing the radiographic inspection method.

As indicated above, the radiographic inspection method is adapted for inspecting various thick parts of a nuclear power plant or another industrial facility. The purpose of the inspection is detecting flaws in the part.

The radiographic inspection method comprises the following steps:
- generating ionizing radiation on a first side of the part;
- selecting a first energy threshold E1 at any level in the range [100 keV; 1200 keV];
- counting photons using a digital detector array 5 arranged on a second side of the part opposite the first side, the digital detector array 5 comprising a plurality of photon counting detectors 7, each photon counting detector 7 detecting single photons, assessing an energy of each photon detected, comparing said energy with at least the first energy threshold E1, and incrementing a first photon counter when the energy assessed is higher than the first energy threshold E1, the photon counting detector 7 being able to detect photons of any energy in a range [1 keV; 20000 keV] ;
- constituting a first image using the values of the first photon counters and storing the first image.

According to the present invention, the radiographic inspection method further comprises a step of selecting a second energy threshold E2 at any level in the range [100 keV; 1300 keV], the second energy threshold E2 being chosen higher than the first energy threshold E1.

For example, the second energy threshold E2 is at least 5 keV higher than the first energy threshold (E1).

At the counting step, each photon counting detector 7 compares the energy of the photon detected with said second energy threshold E2 and increments a second photon counter when the energy assessed is higher than the second energy threshold E2.

The method in this case comprises a step of constituting a second image using the values of the second photon counters and storing the second image.

According to the present invention, the method comprises a step of calculating a third image by subtracting the second image from the first image.

It allows isolating on the third image only the useful rays, made by photons whose energy is comprised in the range E1 - E2.

The method comprises a step of identifying flaws in the part using the first image and/or the third image.

According to the present invention, two levels of energy discrimination are used. Two photon counters are associated to each PCD 7.

The ionizing radiation generated are preferably photons having an energy higher than 130 keV.

The ionizing radiation are generated typically by a source 3 of a type described above.

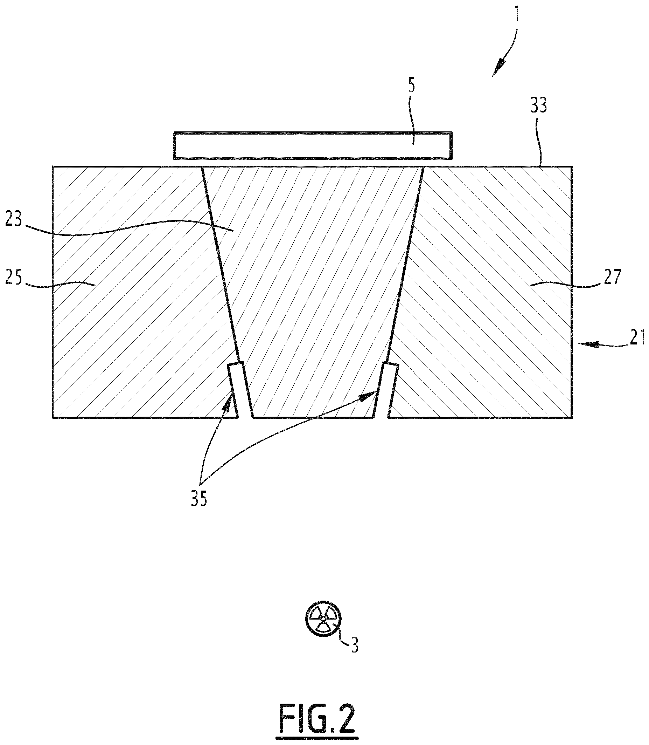

The arrangement of the source 3 and of the DDA 5 is typically as shown on the example depicted on the figures 1 and 2.

The source 3 is inserted inside the pipe 21, up to a position where the source 3 is in the plane of the weld 23.

The source 3 is on the inner side of the pipe 21.

The DDA 7 is located on the outer side of the pipe 21.

It is typically arranged against or very near the outer surface 33 of the pipe 21, and more specifically against or very near the outer surface of the weld 23.

The DDA 5 and the PCDs 7 are as described above.

The steps of counting the photons having an energy higher than the first energy threshold E1 and counting the photons having an energy higher than the second energy threshold E2 are carried out simultaneously. When a photon is detected by the PCD 7, none of the first and second photon counter is incremented, or only the first photon counter is incremented, or both the first and second photon counters are incremented simultaneously.

The first image and /or the second image are constituted as described above.

The third image is constituted by subtracting the second image from the first image.

More precisely, the third image is constituted by considering for each pixel a third value, equal to the value of the first photon counter minus the value of the second photon counter. The colour of the pixel is chosen as a function of said third value, in the way described above.

The first energy thresholds E1 and/or second energy threshold E2 are selected as a function of the energy level(s) of the ionizing radiation generated by the source 3.

Typically, the first energy level E1 is selected in order to reduce on the images the background due to scattered photons.

Scattered events comprise Compton scatter, fluorescence, bremsstrahlung, multiple events, etc. The global effect is a larger number of detected scattered events, the spectrum of which extend towards low energies.

A significant advantage of the invention concerns the possibility of reducing image contamination from environment radiation, using the first energy threshold E1 and the second energy threshold E2.

For example, one of the radionuclides that originate during NPP operation is iodine 131, which emits gamma rays of 364 keV. Selecting a first energy threshold E1 higher than 364 keV, for example equal to 460 keV, allows eliminating from the first image and from the third image the contamination from the possible presence of this radionuclide in the inspection environment.

There is also the possibility to select the second energy threshold E2 in order to reduce the image contamination due to radionuclides emitting high-energy gamma rays such as Cobalt 60 or Cesium 137. Cobalt 60 emits gamma rays with energies of 1.17 and 1.33 MeV. Cs137 emits gamma rays with energies of 662 keV.

Selecting the second energy threshold E2 between 620 keV and 1 MeV allows removing in part from the third image at least the photons emitted by Co60. When the second energy threshold E2 is choosen lower than 660 keV, the photons emitted by Co60 and Cs137 are eliminated in part.

Selecting E1 at 460 keV and E2 at 650 keV isolate a useful image composed by photons whose energy is comprised in the range 460keV - 650 keV.

Note that E2 is larger than 612,5 keV, the Iridium 192 spectrum largest (useful) energy. As a consequence, the presence of the second energy threshold will not perturb image quality.

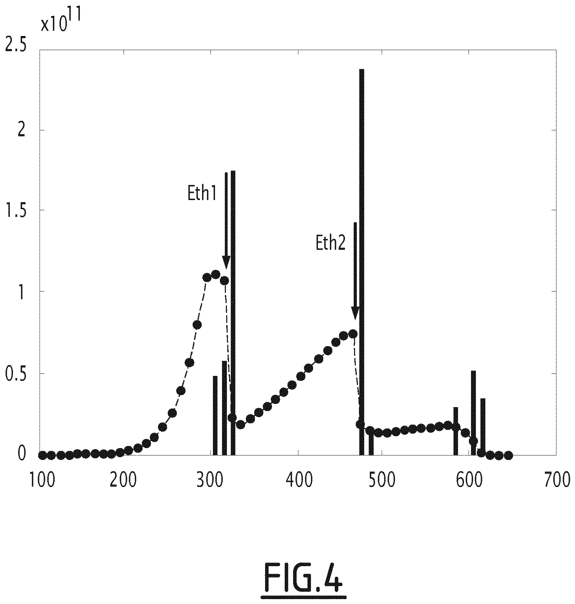

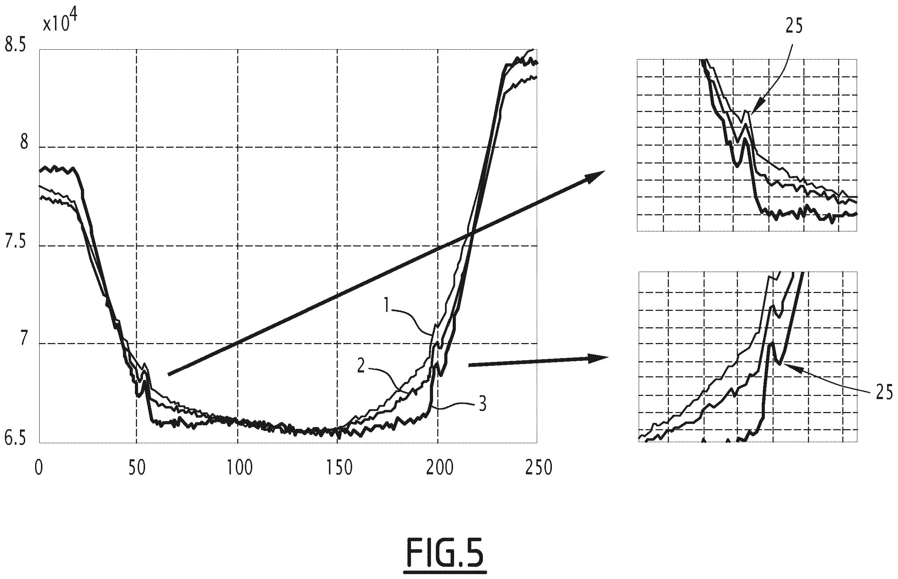

The figures 4 and 5 shows how the first energy thresholds E1 can be selected, for the example of implementation illustrated on the figures 1 and 2.

The figure 4 is a graph giving the numbers of transmitted photons (peaks made of solid lines) and of scattered photons (curve made of an interrupted line) detected by a PCD 7 of the DDA 5 in the situation of the figure 2. The energy of the photons in keV is in abscissa.

The figure 5 is a diagram showing a profile extracted from the image produced by the DDA of the figure 2, in case the first energy threshold is set to 0 keV (curve 1), Eth1 = 310 keV (curve 2), and Eth2 = 460 keV (curve 3). The abscissa corresponds to the reference of the pixels along the profile, and the ordinate is the count of the PCD 7 corresponding to said pixel

The figures 4 and 5 was obtained by simulation.

The source 3 is a source of Ir192.

The calculation were made assuming that two flaws 35 are located on the inner surface of the pipe 21, at the interface between the weld 23 and the pipe segments 25, 27. The size of each flaw 35 is 20 mm x 6 mm x 0,1 mm.

The thickness of the pipe wall is approximately 84 mm, and the outer diameter of the pipe is approximately 948 mm.

The slope of the contact surface between the weld and the pipe segments 25, 27 is 13°.

The scatter events are not eliminated from the image when the first energy threshold is 0. A part of the scatter events is eliminated by choosing the first energy threshold at Eth1 = 310 keV, as shown on the figure 4. A larger part of the scatter events is eliminated by choosing the first energy threshold at Eth2 = 460 keV, as shown on the figure 4.

Reducing the scatter events produce images having a sharper contrast, as appears on the figure 5.

The two flaws 25 appear on the figure 5 as two small peaks, located around pixel number 50 and pixel number 200. The two details enlarged on the right of the figure 5 clearly show that the peak's height is larger when the first energy threshold is Eth1 = 310 keV, and even larger when the first energy threshold is Eth2 = 460 keV,

The flaws are visually detected by the operators on the first image and/or on the third image.

The flaws appear typically as areas of the images with a different shape and/or colour, that can be visually detected by an operator when the images are displayed on the display.

## Claims

1. Radiographic inspection assembly (1), comprising:
- a source (3) generating ionizing radiation;
- a digital detector array (5) comprising a plurality of photon counting detectors (7), each photon counting detector (7) being arranged for detecting single photons, assessing an energy of the photon detected, comparing said energy with at least a first energy threshold (E1), and incrementing a first photon counter when the energy assessed is higher than the first energy threshold (E1), the photon counting detector (7) being able to detect photons of any energy in a range [1 keV; 20000 keV] ;
- a control (15), arranged for selecting the first energy threshold (E1) at any level in the range [100 keV; 1200 keV];
- a calculation device (17), arranged for constituting a first image using the values of the first photon counters and storing the first image;
wherein each photon counting detector (7) is arranged for comparing the energy of the photon detected with a second energy threshold (E2), and incrementing a second photon counter when the energy assessed is higher than the second energy threshold (E2) ;
- the control (15) being arranged for selecting the second energy threshold (E2) at any level in the range [100 keV; 1300 keV] and higher than the first energy threshold (E1);
- the calculation device (17) being arranged for constituting a second image using the values of the second photon counters and storing the second image and; wherein the calculation device (17) is arranged for calculating a third image by subtracting the second image from the first image.

2. The radiographic inspection assembly according to the claim 1, wherein the source (3) generating ionizing radiation generates photons having an energy higher than 130 keV.

3. The radiographic inspection assembly according to the claim 1 or 2, wherein the assembly comprises a holding and moving device (19), arranged for holding the digital detector array (7) and for moving the digital detector array (7) between several inspection positions with respect to a part to be inspected.

4. Radiographic inspection method of a part, comprising the following steps:
- generating ionizing radiation on a first side of the part;
- selecting a first energy threshold (E1) at any level in the range [100 keV; 1200 keV];
- counting photons using a digital detector array (5) arranged on a second side of the part opposite the first side, the digital detector array (5) comprising a plurality of photon counting detectors (7), each photon counting detector (7) detecting single photons, assessing an energy of each photon detected, comparing said energy with at least the first energy threshold (E1), and incrementing a first photon counter when the energy assessed is higher than the first energy threshold (E1), the photon counting detector being able to detect photons of any energy in a range [1 keV; 20000 keV] ;
- constituting a first image using the values of the first photon counters and storing the first image;
wherein the method comprises a step of selecting a second energy threshold (E2) at any level in the range [100 keV; 1300 keV], the second energy threshold (E2) being chosen higher than the first energy threshold (E1), wherein each photon counting detector (7) compares the energy of the photon detected with said second energy threshold (E2) and increments a second photon counter when the energy assessed is higher than the second energy threshold (E2), and wherein the method comprises a step of constituting a second image using the values of the second photon counters and storing the second image; and
wherein the method comprises a step of calculating a third image by subtracting the second image from the first image.

5. The radiographic inspection method according to the claim 4, wherein the second energy threshold (E2) is comprised between 620 keV and 1 MeV, in order to remove in part from the third image at least the photons emitted by Co60.

6. The radiographic inspection method according to the claim 4 or 5, wherein the method comprises a step of identifying flaws (25) in the part using the third image.

7. The radiographic inspection method according to any one the claim 4 to 6, wherein the ionizing radiation generated are photons having an energy higher than 130 keV.

## Patentansprüche

1. Röntgeninspektionsanordnung (1), umfassend:
- eine Quelle (3), die ionisierende Strahlung erzeugt;
- ein digitales Detektorfeld (5), umfassend eine Vielzahl von Photonenzählungsdetektoren (7), wobei jeder Photonenzählungsdetektor (7) angeordnet ist, um einzelne Photonen zu detektieren, eine Energie des detektierten Photons zu bewerten, diese Energie mit mindestens einem ersten Energieschwellenwert (E1) zu vergleichen und einen ersten Photonenzähler zu inkrementieren, wenn die bewertete Energie höher ist als der erste Energieschwellenwert (E1), wobei der Photonenzählungsdetektor (7) in der Lage ist, Photonen jeder Energie in einem Bereich [1 keV; 20 000 keV] zu detektieren;
- eine Steuerung (15), die angeordnet ist, um den ersten Energieschwellenwert (E1) auf einem beliebigen Niveau in dem Bereich [100 keV; 1200 keV] auszuwählen;
- eine Berechnungsvorrichtung (17), die angeordnet ist, um ein erstes Bild unter Verwendung der Werte der ersten Photonenzähler zu erstellen und das erste Bild zu speichern;
wobei jeder Photonenzähldetektor (7) angeordnet ist, um die Energie des detektierten Photons mit einem zweiten Energieschwellenwert (E2) zu vergleichen und einen zweiten Photonenzähler zu inkrementieren, wenn die bewertete Energie höher ist als der zweite Energieschwellenwert (E2);
- wobei die Steuerung (15) angeordnet ist, um den zweiten Energieschwellenwert (E2) auf einem beliebigen Niveau in dem Bereich [100 keV; 1300 keV] und höher als den ersten Energieschwellenwert (E1) auszuwählen;
- wobei die Berechnungsvorrichtung (17) zum Erzeugen eines zweiten Bilds unter Verwendung der Werte der zweiten Photonenzähler und zum Speichern des zweiten Bilds angeordnet ist und; wobei die Berechnungsvorrichtung (17) zum Berechnen eines dritten Bilds durch Subtrahieren des zweiten Bilds von dem ersten Bild angeordnet ist.

2. Röntgeninspektionsanordnung nach Anspruch 1, wobei die Quelle (3), die ionisierende Strahlung erzeugt, Photonen mit einer Energie von mehr als 130 keV erzeugt.

3. Röntgeninspektionsanordnung nach Anspruch 1 oder 2, wobei die Anordnung eine Halte- und Bewegungsvorrichtung (19) umfasst, die zum Halten der digitalen Detektoranordnung (7) und zum Bewegen der digitalen Detektoranordnung (7) zwischen mehreren Prüfpositionen in Bezug auf ein zu prüfendes Teil angeordnet ist.

4. Röntgeninspektionsverfahren eines Teils, umfassend folgenden Schritte:
- Erzeugen ionisierender Strahlung auf einer ersten Seite des Teils;
- Auswählen eines ersten Energieschwellenwerts (E1) auf einem beliebigen Niveau in dem Bereich [100 keV; 1200 keV];
- Zählen von Photonen unter Verwendung eines digitalen Detektorfeldes (5), das auf einer zweiten Seite des Teils gegenüber der ersten Seite angeordnet ist, wobei das digitale Detektorfeld (5) eine Vielzahl von Photonenzähldetektoren (7) umfasst, wobei jeder Photonenzähldetektor (7) einzelne Photonen erfasst und eine Energie jedes erfassten Photons bewertet, Vergleich dieser Energie mit mindestens dem ersten Energieschwellenwert (E1) und Inkrementieren eines ersten Photonenzählers, wenn die bewertete Energie höher ist als der erste Energieschwellenwert (E1), wobei der Photonenzähldetektor in der Lage ist, Photonen jeder Energie in einem Bereich [1 keV; 20 000 keV] zu erfassen;
- Erstellen eines ersten Bilds unter Verwendung der Werte der ersten Photonenzähler und Speichern des ersten Bilds;
wobei das Verfahren einen Schritt eines Auswählens eines zweiten Energieschwellenwerts (E2) auf einem beliebigen Niveau in dem Bereich [100 keV; 1300 keV] umfasst, wobei der zweite Energieschwellenwert (E2) höher als der erste Energieschwellenwert (E1) gewählt wird, wobei jeder Photonenzähldetektor (7) die Energie des detektierten Photons mit dem zweiten Energieschwellenwert (E2) vergleicht und einen zweiten Photonenzähler inkrementiert, wenn die bewertete Energie höher ist als der zweite Energieschwellenwert (E2), und, wobei das Verfahren einen Schritt eines Bildens eines zweiten Bilds unter Verwendung der Werte der zweiten Photonenzähler und eines Speicherns des zweiten Bilds umfasst; und,
wobei das Verfahren einen Schritt eines Berechnens eines dritten Bilds durch Subtrahieren des zweiten Bilds von dem ersten Bild umfasst.

5. Röntgeninspektionsverfahren nach Anspruch 4, wobei der zweite Energieschwellenwert (E2) zwischen 620 keV und 1 MeV ist, um zumindest die von Co60 emittierten Photonen teilweise aus dem dritten Bild zu entfernen.

6. Röntgeninspektionsverfahren nach Anspruch 4 oder 5, wobei das Verfahren einen Schritt eines Identifizierens von Fehlern (25) in dem Teil unter Verwendung des dritten Bilds umfasst.

7. Röntgeninspektionsverfahren nach einem der Ansprüche 4 bis 6, wobei die erzeugte ionisierende Strahlung Photonen mit einer Energie von mehr als 130 keV sind.

## Revendications

1. Ensemble d'inspection radiographique (1), comprenant :
- une source (3) générant un rayonnement ionisant ;
- un réseau de détecteurs numériques (5) comprenant une pluralité de détecteurs de comptage de photons (7), chaque détecteur de comptage de photons (7) étant conçu pour détecter des photons uniques, pour évaluer une énergie du photon détecté, pour comparer ladite énergie à au moins un premier seuil d'énergie (E1), et pour incrémenter un premier compteur de photons lorsque l'énergie évaluée est supérieure au premier seuil d'énergie (E1), le détecteur de comptage de photons (7) pouvant détecter des photons d'un niveau d'énergie quelconque dans une plage [1 keV ; 20 000 keV] ;
- une commande (15), conçue pour sélectionner le premier seuil d'énergie (E1) à un niveau quelconque dans la plage [100 keV ; 1 200 keV] ;
- un dispositif de calcul (17), conçu pour constituer une première image à l'aide des valeurs des premiers compteurs de photons et pour stocker la première image ; dans lequel chaque détecteur de comptage de photons (7) est conçu pour comparer l'énergie du photon détecté à un second seuil d'énergie (E2), et pour incrémenter un second compteur de photons lorsque l'énergie évaluée est supérieure au second seuil d'énergie (E2) ;
- la commande (15) étant conçue pour sélectionner le second seuil d'énergie (E2) à un niveau quelconque dans la plage [100 keV ; 1 300 keV] et supérieur au premier seuil d'énergie (E1) ;
- le dispositif de calcul (17) étant conçu pour constituer une deuxième image à l'aide des valeurs des seconds compteurs de photons et pour stocker la deuxième image et ; dans lequel le dispositif de calcul (17) est conçu pour calculer une troisième image en soustrayant la deuxième image de la première image.

2. Ensemble d'inspection radiographique selon la revendication 1, dans lequel la source (3) générant un rayonnement ionisant génère des photons ayant une énergie supérieure à 130 keV.

3. Ensemble d'inspection radiographique selon la revendication 1 ou 2, l'ensemble comprenant un dispositif de maintien et de déplacement (19), conçu pour maintenir le réseau de détecteurs numériques (7) et pour déplacer le réseau de détecteurs numériques (7) entre plusieurs positions d'inspection par rapport à une partie à inspecter.

4. Procédé d'inspection radiographique d'une partie, comprenant les étapes suivantes :
- la génération d'un rayonnement ionisant sur un premier côté de la partie ;
- la sélection d'un premier seuil d'énergie (E1) à un niveau quelconque dans la plage [100 keV ; 1 200 keV] ;
- le comptage des photons à l'aide d'un réseau de détecteurs numériques (5) disposé sur un second côté de la partie opposé au premier côté, le réseau de détecteurs numériques (5) comprenant une pluralité de détecteurs de comptage de photons (7), chaque détecteur de comptage de photons (7) détectant des photons uniques, évaluant une énergie de chaque photon détecté, comparant ladite énergie au moins au premier seuil d'énergie (E1) et incrémentant un premier compteur de photons lorsque l'énergie évaluée est supérieure au premier seuil d'énergie (E1), le détecteur de comptage de photons pouvant détecter des photons d'un niveau d'énergie quelconque dans une plage [1 keV ; 20 000 keV] ;
- la constitution d'une première image à l'aide des valeurs des premiers compteurs de photons et le stockage de la première image ;
le procédé comprenant une étape de sélection d'un second seuil d'énergie (E2) à un niveau quelconque dans la plage [100 keV ; 1 300 keV], le second seuil d'énergie (E2) étant choisi au-dessus du premier seuil d'énergie (E1), dans lequel chaque détecteur de comptage de photons (7) compare l'énergie du photon détecté audit second seuil d'énergie (E2) et incrémente un second compteur de photons lorsque l'énergie évaluée est supérieure au second seuil d'énergie (E2), et le procédé comprenant une étape de constitution d'une deuxième image à l'aide des valeurs des deuxièmes compteurs de photons et de stockage de la deuxième image ; et
le procédé comprenant une étape de calcul d'une troisième image en soustrayant la deuxième image de la première image.

5. Procédé d'inspection radiographique selon la revendication 4, dans lequel le second seuil d'énergie (E2) est compris entre 620 keV et 1 MeV, afin d'éliminer, en partie de la troisième image, au moins les photons émis par le Co60.

6. Procédé d'inspection radiographique selon la revendication 4 ou 5, le procédé comprenant une étape d'identification de défauts (25) dans la partie utilisant la troisième image.

7. Procédé d'inspection radiographique selon l'une quelconque des revendications 4 à 6, dans lequel le rayonnement ionisant généré est constitué de photons ayant une énergie supérieure à 130 keV.
